# EUROPEAN PATENT SPECIFICATION

(11) **EP 2 817 439 B1**
(45) Date of publication and mention of the grant of the patent: **18.07.2018**
(21) Application number: 12869309.0
(22) Date of filing: 26.09.2012
(51) Int. Cl.: C25D 11/24, B29C 45/14, C08J 5/00, C25D 11/08, B29K 705/02, C08K 7/14, C25D 11/16

(54) **ALUMINUM ALLOY, ALUMINUM ALLOY RESIN COMPOSITE AND METHOD OF PREPARING THE SAME**
ALUMINIUMLEGIERUNG, ALUMINIUMLEGIERUNGSHARZVERBUNDSTOFF UND VERFAHREN ZUR HERSTELLUNG DAVON
ALLIAGE D'ALUMINIUM, COMPOSITE DE RÉSINE D'ALLIAGE D'ALUMINIUM ET LEUR PROCÉDÉ DE PRÉPARATION

(30) Priority: 24.02.2012 CN 201210043634
(43) Date of publication of application: 31.12.2014
(73) Proprietor: Shenzhen BYD Auto R&D Company Limited, Shenzhen, Guangdong 518118 (CN); BYD Company Limited, Shenzhen 518118 (CN)
(72) Inventor: SUN, Jian, Shenzhen Guangdong 518118 (CN); ZENG, Juan, Shenzhen Guangdong 518118 (CN); CHENG, Jun, Shenzhen Guangdong 518118 (CN)
(74) Representative: Gulde & Partner
(86) International application number: PCT/CN2012/082043
(87) International publication number: WO 2013/123773

(56) References cited:
- EP-A1- 2 031 099
- EP-A1- 2 221 398
- WO-A1-2009/078377
- WO-A1-2010/073636
- WO-A1-2011/055757
- CN-A- 1 706 992
- US-A- 4 687 551
- US-A1- 2008 102 404
- US-A1- 2010 177 392
- US-A1- 2011 008 644
- US-A1- 2011 297 549

## Description

### FIELD

The present disclosure relates to the field of metal-plastic molding, and more particularly to a method of preparing an aluminum alloy-resin composite.

### BACKGROUND

In the fields of manufacture of articles such as automobiles, household appliances and industrial machines, a metal and a resin need to be firmly bonded together. Currently, in a conventional method, an adhesive is used at normal temperature or under heating to integrally bond a metal and a synthetic resin. One research direction is to integrally bond an engineering resin with high strength to a magnesium alloy, an aluminum alloy, or ferroalloys such as stainless steel directly without an adhesive.

Nano molding technology (NMT) is a technique of integrally bonding a metal and a resin, which allows the resin to be directly injection molded on a surface of a metal sheet by nano molding the surface of the metal sheet so as to obtain a metal-resin integrally molded product. For effective bonding of a metal and a resin, NMT may replace commonly used insert molding or zinc-aluminum or magnesium-aluminum die casting so as to provide a metal-resin integrally molded product with low cost and high performance. Compared with the bonding technology, NMT may reduce the whole weight of the product, and may ensure excellent strength of the mechanical structure, high processing rate, high output, and many appearance decoration methods, and consequently may apply to vehicles, IT apparatuses and 3C products.

US 2011/297549 A1 discloses an aluminum alloy-and-resin composite including an aluminum alloy substrate, wherin an anodic oxide film is formed on the substrate. Further, a resin composition is bonded with the anodic oxide film. The anodic oxide film has nano-pores with an average diameter of about 30-60 nm. The resin composition fills the nano-pores and coatings surfaces of the anodic oxide film. A method for producing a similar product is described in US2011/008644 A1 wherein the product is a galvanized steel sheet and a resin molded article.

Methods for anodizing an etching aluminum alloy parts are disclosed in EP 2 031 099 A1 and US 2008 /102404 A1.

### SUMMARY

Embodiments of the present disclosure seek to solve at least one of the problems existing in the prior art to at least some extent, particularly technical problems of weak combination force between the aluminum alloy and resin in an aluminum alloy-resin composite. And the present disclosure aims to provide a method of preparing an aluminum alloy-resin composite with strong combination force between the aluminum alloy and resin, which is easy for massive production and of less pollution.

According to claim 1, there is provided a method of preparing an aluminum alloy-resin composite comprising the steps of:
S1: anodizing a surface of an aluminum alloy to form an oxide layer on the surface, in which the oxide layer is formed with nanopores having an average pore size of 10nm to 100nm by providing the aluminum alloy as an anode in a H₂SO₄ solution with a concentration of 10 wt% to 30 wt%; and electrolyzing the aluminum alloy at a temperature of 10°C to 30°C at a voltage of 10V to 100V for 1min to 40min to form the oxide layer with a thickness of 1µm to 10µm on the surface of the aluminum alloy substrate; and;
S2: immersing the resulting aluminum alloy in step S1 in an etching solution being corrosive to the oxide layer to form corrosion pores in an outer surface of the oxide layer, in which the corrosion pores have an average pore size of 200nm to 2000nm, wherein the etching solution is an alkaline etching solution with a pH of 10 to 13; and
S3: injection molding a resin onto the surface of the resulting aluminum alloy substrate in step S2 in a mold to obtain the aluminum alloy-resin composite.

It was found by the inventors surprisingly that a unique two-layer spatial pore structure may be formed on the surface of aluminum alloy, by means of the method according to embodiments of present disclosure, an aluminum oxide layer may be formed on the surface of aluminum alloy, and the aluminum oxide layer possess nanopores with excellent properties. By means of the technical solutions according to embodiments of present disclosure, nanopores having an average pore size of about 10 to about 100nm are formed, which is a unique structure, and has well connectivity with resin. Meanwhile, by means of further corrosion, corrosion pores are formed on the outer surface, to be contacted with a resin, of the aluminum oxide layer. The corrosion pores have a larger pore size than nanopores. By means of the technical solutions according to embodiments of present disclosure, nanopores having an average pore size of about 200nm to about 2000nm are formed on the outer surface, which is a unique structure and contribute to enhance the connectivity of a resin with aluminum alloy. In the course of following molding step, a resin may penetrate into the pores in the inner layer through the relative bigger pores on the outer surface of aluminum alloy, which will make molding easier. According to embodiments of present disclosure, aluminum alloy may be joined to a resin tightly without additional moiety, and a higher strength may be obtained. According to embodiments of present disclosure, there is little influence on the size of metal substrate and the appearance of aluminum alloy, and relatively less heat is produced in the course of processing. Meanwhile, resin may be easily injection molded into the corrosion pores with larger pore size on the surface, and there is no particular requirement on the resin. Then the present technical solution may be used widely, is environment-friendly, and may be adopted for massive production.

Additional aspects and advantages of embodiments of present disclosure will be given in part in the following descriptions, become apparent in part from the following descriptions, or be learned from the practice of the embodiments of the present disclosure.

### BRIEF DESCRIPTION OF THE DRAWINGS

These and other aspects and advantages of the disclosure will become apparent and more readily appreciated from the following descriptions taken in conjunction with the drawings in which:
Fig. 1 shows the presence of two-layer spatial pore structure in the aluminum oxide layer prepared in one embodiment of present disclosure;
Fig. 2 shows a scanning electron microscopy diagram of aluminum alloy sheet surface after surface treatment 1 in Example 1; and
Figs. 3a and 3b show scanning electron microscopy diagrams of aluminum alloy sheet surface after surface treatment 2 in Example 1.

### DETAILED DESCRIPTION

Reference will be made in detail to embodiments of the present disclosure. The embodiments described herein are explanatory, illustrative, and used to generally understand the present disclosure. The embodiments shall not be construed to limit the present disclosure.

According to the method, there is provided an aluminum alloy comprising: an aluminum alloy substrate; and an oxide layer formed on the surface of the aluminum alloy substrate, and the oxide layer comprises an outer surface and an inner surface; wherein, the outer surface contains corrosion pores having an average pore size of about 200nm to about 2000nm; and the inner surface contains nanopores having an average pore size of about 10nm to about 100nm. The aluminum alloy may have well combination with resin, and is easy to be massively produced without pollution.

According to embodiments of present disclosure, the corrosion pores have an average pore size of about 200nm to about 1000nm, preferably about 400nm to about 1000nm, and the nanopores have an average pore size of about 20nm to about 80nm, preferably about 20nm to about 60nm. Then, the structure of two-layered pore may be further optimized, and further contribute to the direct injection of resin when molding and improve the combination of resin with the alloy.

According to embodiments of present disclosure, the corrosion pores have an average pore size of about 0.5µm to about 9.5µm, preferably 0.5µm to 5µm. Then optimize the structure of corrosion pores, which contribute to the penetration of injected resin.

According to embodiments of present disclosure, the corrosion pores are communicated with the nanopores. Then the structure of two-layered pore may be further optimized, and further contribute to the direct injection of resin and molding, improving the combination of resin with the alloy.

According to embodiments of present disclosure, the oxide layer has a thickness of about 1µm to about 10µm, preferably about 1µm to about 5µm. Then the oxide layer may have an improved combination with the aluminum alloy substrate, and optimize the structure of corrosion pores, thus make it easy to create optimized corrosion pores.

According to embodiments of present disclosure, the nanopores have an average depth of about 0.5µm to about 9.5µm, preferably about 0.5µm to 5µm. Then the structure of nanopores is further optimized, improving the degree of filling of melt resin in the nanopores, ensuring that the resin may penetrate into the nanopores with such depth, decreasing the connection area between resin and oxide layer, and there is no gap in the nanopores, and then the connectivity was further enhanced.

According to the present disclosure, a method steps of preparing an aluminum alloy described above is provided. The method steps comprises steps of:

### S1: anodizing a surface of an aluminum alloy to form an oxide layer on the surface, in which the oxide layer is formed with nanopores

According to embodiments of present disclosure, in this step, aluminum alloy, optionally pre-treated prior to step S1, is subjected to anodization treatment, thus an oxide layer is formed on the surface of the aluminum alloy, and the oxide layer is formed with nanopores. According to embodiments of present disclosure, the method for the anodization treatment is well known to the skilled person in the art. According to embodiments of present disclosure, the step S1, namely the anodization treatment comprises: providing an aluminum alloy, optionally pre-treated prior to this step, as an anode in a H₂SO₄ solution with a concentration of about 10wt% to about 30wt%; and electrolyzing the aluminum alloy at a temperature of about 10°C to about 30°C at a voltage of about 10V to about 100V for about 1min to about 40min to form the oxide layer with a thickness of about 1µm to about 10µm on the surface of the aluminum alloy. According to embodiments of present disclosure, any apparatus well known for the anodization treatment may be applied in present disclosure, for example according to an embodiment of present disclosure, an anodization tank may be applied. According to embodiments of present disclosure, the oxide layer formed by means of anodization treatment may have a preferred thickness of about 1µm to about 10µm, preferably about 1µm to about 5µm. According to embodiments of present disclosure, the nanopores of the oxide layer have an average pore size of about 10nm to about 100nm, preferred about 20nm to about 80 nm, and further preferred about 20nm to about 60 nm. According to embodiments of present disclosure, the nanopores may have a depth of about 0.5µm to about 9.5µm, preferably about 0.5µm to about 5µm. It was founded by the inventors surprisingly that with the nanopores, the connectivity force between the oxide layer and the resin will be stronger.

### S2: immersing the resulting aluminum alloy in step S1 in an etching solution, to form corrosion pores in an outer surface of the oxide layer

According to embodiments of present disclosure, in this step, the resulting aluminum alloy substrate in step S1 is immersed in an etching solution thus corrosion pores with an average pore size of about 200nm to about 2000nm are formed in the outer surface of the oxide layer formed on the aluminum alloy substrate in step S1.

In this step, an etching solution is used to treat the resulting aluminum alloy substrate in step S1, then corrosion pores are formed in an outer surface of the oxide layer, and the size of corrosion pores is larger than that of the nanopores. The type and concentration of the etching solution is not specially limited, as long as the etching solution comprises a solution being corrosive to the oxide layer. According to the present invention the etching solution is an alkaline etching solution with a pH of about 10 to about 13. According to embodiments of present disclosure, the etching solution may be an alkaline solution with a pH of about 10 to about 13 of sole alkali or mixture of several alkalis. According to embodiments of present disclosure, the etching solution may comprise an aqueous solution containing at least one selected from a group consisting of Na₂CO₃, NaHCO₃, NaOH, NaH₂PO₄, Na₂HPO₄, Na₃PO₄, Na₂SO₃ and Na₂B₄O₇. According to embodiments of present disclosure, the alkaline solution is an aqueous solution containing Na₂CO₃ and/or NaHCO₃. According to embodiments of present disclosure, in the alkaline solution, Na₂CO₃ and/or NaHCO₃ have a mass percent concentration of about 0.1wt%-15wt% respectively. According to embodiments of present disclosure, in the alkaline solution, Na₂CO₃ and/or NaHCO₃ have a mass percent concentration of about 0.1wt%-10wt% respectively. According to embodiments of present disclosure, the etching solution may be a mixture of a soluble alkali with a soluble hydrophosphate or dihydrogen phosphate. According to embodiments of present disclosure, the soluble alkali may be a strong alkali. According to embodiments of present disclosure, the dihydrogen phosphate is at least one selected from a group consisting of sodium dihydrogen phosphate, potassium dihydrogen phosphate, ammonium dihydrogen phosphate, and aluminum dihydrogen phosphate, and the soluble alkali is at least one selected from a group consisting of sodium hydroxide and potassium hydroxide. Then, with the preferred combination of dihydrogen phosphate and alkali, the corrosion pores formed will distribute evenly in the surface of oxide layer with uniform pore sizes, and pore structure may be excellent, enabling a better connectivity performance of a resin layer with the aluminum alloy substrate, resulting in a better tensile strength and a better integral joining of the aluminum alloy-resin composite. According to an embodiment of present disclosure, the dihydrogen phosphate has a concentration of about 50wt% to about 99wt%, and the soluble alkali has a concentration of about 1wt% to about 50wt%, and more preferably, the dihydrogen phosphate has a concentration of about 60wt% to about 99wt%, and the soluble alkali has a concentration of about 1wt% to about 40wt%. Further, the etching solution may be at least one of ammonia solution, hydrazine aqueous solution, hydrazine derivatives aqueous solution, water-soluble amine compound aqueous solution and NH₃-NH₄Cl aqueous solution and the like. According to an embodiment of present disclosure, step S2 repeatedly immersing the resulting aluminum alloy in step S1 in an etching solution for at least one times, for example 2 to 10 times, each immersing last for about 1 min to about 60min, and cleaning the aluminum alloy with water after each immersing, for example washing with de-ionized water. According to an embodiment of present disclosure, the cleaning may comprise just placing the article to be cleaned in a washing tank and stand for about 1 min to 5min, and may comprise washing the article to be cleaned in a washing tank for about 1 min to 5min.

As mentioned before, prior to the treatment of step S1, the aluminum alloy may be subjected to a pretreatment on the surface, which generally comprises mechanical burnishing or mechanical lapping to remove visible foreign matters from the surface, and degreasing and washing the aluminum alloy to remove processing oil adhered to the metal surface. Preferably, pretreatment may comprise burnishing the surface of an aluminum alloy, for example further may comprise burnishing the surface of an aluminum alloy using a sand paper of about 100 mesh to about 400 mesh or using a polishing machine, to create small pores of microns. According to embodiments of present disclosure, the burnished aluminum alloy may be sequentially subjected to oil removing, a first washing with water, alkali etching, a second washing with water, neutralizing, and a third washing with water. According to embodiments of present disclosure, the aluminum alloy may be cleaned by means of ultrasonic wave using any well-known solvent for about 0.5 hour to about 2 hours to remove oily dirty from the surface of aluminum alloy, and then place the aluminum alloy in an acid/alkali aqueous solution, and wash the surface again under ultrasonic wave. The types of the solvents and acid/alkali aqueous solution are not limited, the solvent used may be ethanol or acetone, and the acid/alkali aqueous solution may be at least one selected from a group consisting of hydrochloric acid, sulphuric acid, sodium hydroxide, potassium hydroxide and the like. According to embodiments of present disclosure, the aluminum alloy is subjected to oil removing treatment using water-free ethanol to remove oil from the surface, and then washing the aluminum alloy using water. Then, the washed aluminum alloy is immersed in a sodium hydroxide solution at a concentration of about 30-70g/L and at a temperature of about 40°C to about 80°C to alkali etch the aluminum alloy for about 1-5min, and washed using deionized water. Then, the aluminum alloy is neutralized using a 10∼30 wt% HNO₃ to remove trace alkali solution, and washed using deionized water. Thus, a pore with a size of microns may be formed in the surface of aluminum alloy. According to embodiments of present disclosure, the pore size may be about 1-10µm.

There are no special limitations to the aluminum alloy used in present disclosure, the examples may be Industry-Standard 1000-7000 series, or various aluminum alloys of molded-class. The aluminum alloy in this disclosure may be commonly-used aluminum alloy with various shapes and structures, which is not limited in present disclosure. The various shapes and structures of the aluminum alloy may be achieved by mechanical processing.

According to the method, there is provided an aluminum alloy resin composite comprising:
an aluminum alloy part described above; and a resin part, which is fixed to the surface of the aluminum ally part by part of which filled in the corrosion pores and corrosion pores of the aluminum alloy part.

There is no special limitation to the resin used in present invention, which may be any resin capable of joining with aluminum alloy, in which thermoplastic resin is preferred. According to embodiments of present disclosure, the thermoplastic resin includes a mixture of a main resin and a polyolefin resin. According to embodiments of present disclosure, the main resin may includes non-crystalline resin, which has a surface gloss and a toughness both superior to those of the highly crystalline resins in the prior art, is used as an injection molding material, and a polyolefin resin with a melting point of about 65°C to about 105°C is also used. Therefore, injection molding at a specific mound temperature may be not required during the molding, subsequent annealing treatment may also be not required, the molding process may be simplified, and it may be ensured that the obtained metal-resin composite may have high mechanical strength and good surface treatment characteristics, thus solving the problem of the surface decoration of a plastic article and meet the diverse requirements of customers.

According to embodiments of present disclosure, it has been found by the inventors through many experiments that in the present disclosure, by using a polyolefin resin with a melting point of about 65°C to about 105°C in the non-crystalline main resin, the flowing capability of the resin in the nanoscale micropore in the surface of the metal sheet may be enhanced, thus ensuring strong adhesive force between the metal and the plastic as well as high mechanical strength of the metal-resin composite. Preferably, based on 100 weight parts of the thermoplastic resin, the amount of the main resin is about 70 weight parts to about 95 weight parts, and the amount of the polyolefin resin is about 5 weight parts to about 30 weight parts.

It has also been found by the inventors that the flowing capability of the resin may be enhanced by including a flow improver in the thermoplastic resin, thus further enhancing the adhesive force between the metal and the plastic as well as the injection molding performance of the resin. Preferably, based on 100 weight parts of the thermoplastic resin, the thermoplastic resin further contains about 1 weight part to about 5 weight parts of a flow improver. Preferably, the flow improver is a cyclic polycarbonate.

As mentioned before, the resin used in present disclosure may include non-crystalline resin. According to embodiments of present disclosure, the main resin includes a mixture of polyphenylene ether (PPO) and polyphenylene sulfide (PPS). According to one embodiment of present disclosure, in the main resin, the weight ratio of polyphenylene ether to polyphenylene sulfide is about 3:1 to about 1:3, preferably about 2:1 to about 1:1. According to embodiments of present disclosure, the main resin includes a mixture of polyphenylene oxide and a polyamide. According to one embodiment of present disclosure, in the main resin, the weight ratio of polyphenylene oxide to the polyamide is about 3:1 to about 1:3, preferably about 2:1 to about 1:1. According to embodiments of present disclosure, in the main resin, the main resin includes a polycarbonate, which may be linear chain polycarbonate or branched polycarbonate.

According to embodiments of present disclosure, the polyolefin resin has a melting point of about 65°C to about 105°C, preferably the polyolefin resin may be grafted polyethylene. Preferably, a grafted polyethylene with a melting point of about 100°C to about 105°C may be used as polyolefin resin.

The resin used in present disclosure may further comprise other additives, and there is no special limitation to the additives, for example, the resin may comprise a filler. And there is no special limitation to the filler, and the non-limiting example of the filler is fiber filler or powder inorganic filler. The fiber filler may include at least one selected from a group consisting of fiberglass, carbon fiber and aromatic polyamide fiber. And the powder inorganic filler may include at least one selected from a group consisting of calcium carbonate, magnesium carbonate, silica, heavy barium sulfate, talcum powder, glass and clay. According to embodiments of present disclosure, based on 100 weight parts of the main resin, the content of the fiber filler is 50-150 weight parts and the content of the powder filler is 50-150 weight parts. Then the resin has a linear expansion coefficient similar to the aluminum alloy both in horizontal and vertical direction.

According to the method of the present disclosure, there is provided a further method of preparing an aluminum alloy-resin composite described above comprising the steps of: preparing an aluminum alloy substrate according to the method descried above; and

### S3: injection molding a resin onto the surface of the resulting aluminum alloy substrate in step S2 in a mold to obtain the aluminum alloy-resin composite

According to embodiments of present disclosure, in this step, the resulting aluminum alloy substrate after the treatments in steps S1 and S2 is placed in a mold, and a resin composition is injected into the mold to combine with the aluminum alloy substrate, thus an aluminum alloy-resin composite is formed after molding treatment.

According to embodiments of present disclosure, the resin used in present disclosure may be prepared by mixing main resin and polyolefin resin. For example, the resin is prepared by mixing evenly a main resin and a polyolefin resin, and then granulation with twin-screw extruding machine.

According to embodiments of present disclosure, a flow improver and a filler may be added to the main resin and mixed evenly, thus the obtained resin has a linear expansion coefficient similar to the aluminum alloy both in horizontal and vertical direction.

According to embodiments of present disclosure, the conditions to carry out the injection molding are not limited. For example, according to one embodiment of present disclosure, the condition of injection molding may be: mold temperature 50 to 300°C, nozzle temperature 200-450°C, pressure maintaining time 1-50s, injection pressure 50-300MPa, injection time 1-30s, delay time 1-30s, and cooling time 1-60s. According to one embodiment of present disclosure, the condition of injection molding may be: mold temperature 80 to 200°C, nozzle temperature 200-350°C, pressure maintaining time 1-10s, injection pressure 90-140MPa, , injection time 3-10s, delay time 15-30s, and cooling time 15-25s. Then the surface of the prepared composite may have a resin with a depth/thickness of 0.5-10mm.

The preparation method of the present disclosure is simple, which simplifies significantly the production process, when compared with existing adhesive technology, and shorten the corrosion time when compared with the existing amine substance. Thus shortens the production time, and significantly reduces the process complexity. All above may be achieved only by directly injection molding after using the process method of the present disclosure. At the same time, the prepared aluminum alloy resin composite by the preparation method of the present disclosure has a combination between the resin layer and the aluminum alloy substrate, and has better tensile shear strength.

According to another aspect of present disclosure, an aluminum alloy-resin composite obtainable by the method cited before is provided. According to embodiments of present disclosure, the aluminum alloy-resin composite comprises an aluminum alloy substrate and a resin layer, in which a resin forming the resin layer is filled in nanopores and corrosion pores. The resin is any well-known resin, as long as it was known that can be combined with aluminum alloy in the art.

In order to make the technical problem, the technical solution and the advantageous effects of the present disclosure more clear, the present disclosure will be further described below in detail with reference to examples thereof. It would be appreciated that particular examples described herein are merely used to understand the present disclosure. The examples shall not be construed to limit the present disclosure. The raw materials used in the examples and the comparative examples are all commercially available, without special limits.

### Example 1

In this example, an aluminum alloy resin composite was prepared.

### 1. Pretreatment:

A commercially available A5052 aluminum alloy plate with a thickness of 1mm was cut into 15mm × 80mm rectangular sheets, which were then polished in a polishing machine, and cleaned with water-free ethanol, and then immersed in a 40g/L NaOH aqueous solution. After 2 min, the rectangular sheets were washed with water and dried to obtain pretreated aluminum alloy sheets.

### 2. Surface treatment 1:

Each aluminum alloy sheet as an anode was placed in an anodizing bath containing a 20wt% H₂SO₄ solution, the aluminum alloy was electrolyzed at a voltage of 20V at 18 °C for 10 min, and then the aluminum alloy sheet was blow-dried.

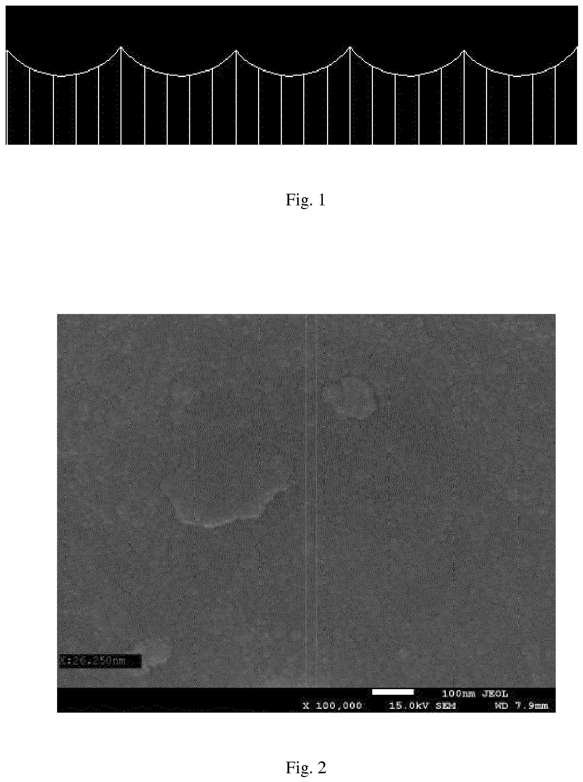

The cross section of the aluminum alloy sheet after the surface treatment 1 was observed by a metalloscope, to find out that an aluminum oxide layer with a thickness of 5µm was formed on the surface of the electrolyzed aluminum alloy sheet. The surface of the aluminum alloy sheet after the surface treatment 1 was observed by an electron microscope (see Fig. 2), to find out thatnanopores with an average pore size of about 40nm to about 60nm and a depth of 1µm was formed in the aluminum oxide layer.

### 3. Surface treatment 2

100ml aqueous solution containing 10wt% Na₂CO₃(pH=12.2) was prepared in a beaker. The aluminum alloy sheet after step (2) was immersed in the sodium carbonate solution at 20 °C, taken out after 5 min, and placed in a beaker containing water to be immersed for 1min. After 5 cycles, after water immersing for the last time, the aluminum alloy sheet was blow-dried.

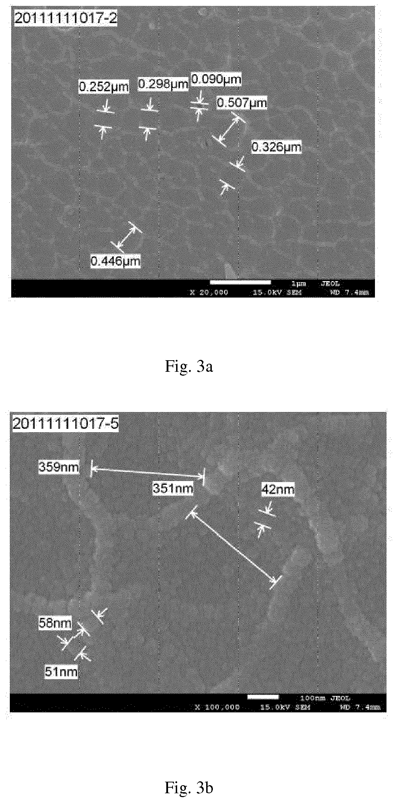

The surface of the aluminum alloy sheet after the surface treatment 2 was observed by an electron microscope (see Figs. 3a and 3b), to find out that corrosion pores with an average pore size of 300nm to 1000nm and a depth of 4µm was formed in the surface of the immersed aluminum alloy sheet. It may also be observed that there was a double-layer three-dimensional pore structure in the aluminum oxide layer similar to the structure shown in Fig. 1, and the corrosion pores was communicated with the nanopores.

### 4. Molding:

The dried aluminum alloy piece was inserted into an injection mold. A resin composition containing a polyphenylene sulfide (PPS) resin and 30wt% fiberglass was injection molded. The aluminum alloy resin composite which was a firmly combination of aluminum alloy and resin composite was obtained after being demolded and cooled.

### Example 2

In this example, an aluminum alloy resin composite was prepared by a method which was substantially the same as the method in Example 1, with the following exceptions.

In the step of surface treatment 1, each aluminum alloy sheet as an anode was placed in an anodizing bath containing a 20wt% H₂SO₄ solution, the aluminum alloy was electrolyzed at a voltage of 15V at 18 °C for 10 min, and then the aluminum alloy sheet was blow-dried.

It was observed that a layer of aluminum oxide film having a thickness of about 5µm was formed after electrolysis, and nanopores having a size of 20-40nm was formed in the aluminum oxide layer. And it was observed that after surface treatment 2, corrosion pores with a size of 300-1000nm and a depth of 4µm was formed in the surface of the immersed aluminum alloy sheet. It may also be observed that there was a double-layer three-dimensional pore structure in the aluminum oxide layer similar to the structure shown in Fig. 1, and the corrosion pores was communicated with the nanopores. And an aluminum alloy resin composite was prepared.

### Example 3

In this example, an aluminum alloy resin composite was prepared by a method which was substantially the same as the method in Example 1, with the following exceptions.

In the step of surface treatment 1, each aluminum alloy sheet as an anode was placed in an anodizing bath containing a 20wt% H₂SO₄ solution, the aluminum alloy was electrolyzed at a voltage of 40V at 18°C for 10 min, and then the aluminum alloy sheet was blow-dried.

It was observed that a layer of aluminum oxide film having a thickness of about 5µm was formed after electrolysis, and nanopores having a size of 60-80nm and a depth of 1µm were formed in the aluminum oxide layer. And it was observed that after surface treatment 2, corrosion pores with a size of 300-1000nm and a depth of 4µm was formed in the surface of the immersed aluminum alloy sheet. It may also be observed that there was a double-layer three-dimensional pore structure in the aluminum oxide layer similar to the structure shown in Fig. 1, and the corrosion pores was communicated with the nanopores. And an aluminum alloy resin composite was prepared.

### Example 4

In this example, an aluminum alloy resin composite was prepared by a method which was substantially the same as the method in Example 1, with the following exceptions.

In the step of surface treatment 1, each aluminum alloy sheet as an anode was placed in an anodizing bath containing a 20wt% H₂SO₄ solution, the aluminum alloy was electrolyzed at a voltage of 20V at 18°C for 15 min, and then the aluminum alloy sheet was blow-dried.

It was observed that a layer of aluminum oxide film having a thickness of about 7µm was formed after electrolysis, and nanopores having a size of 40-60nm and a depth of 3µm were formed in the aluminum oxide layer. And it was observed that after surface treatment 2, corrosion pores with a size of 300-1000nm and a depth of 4µm was formed in the surface of the immersed aluminum alloy sheet. It may also be observed that there was a double-layer three-dimensional pore structure in the aluminum oxide layer similar to the structure shown in Fig. 1, and the corrosion pores was communicated with the nanopores. And an aluminum alloy resin composite was prepared.

### Example 5

In this example, an aluminum alloy resin composite was prepared by a method which is substantially the same as the method in Example 1, with the following exceptions.

In the step of surface treatment 1, each aluminum alloy sheet as an anode was placed in an anodizing bath containing a 20wt% H₂SO₄ solution, the aluminum alloy was electrolyzed at a voltage of 15V at 18 °C for 15 min, and then the aluminum alloy sheet was blow-dried.

It was observed that a layer of aluminum oxide film having a thickness of about 7µm was formed after electrolysis, and nanopores having a size of 20-40nm and a depth of 3µm were formed in the aluminum oxide layer. And it was observed that after surface treatment 2, corrosion pores with a size of 300-1000nm and a depth of 4µm was formed in the surface of the immersed aluminum alloy sheet. It may also be observed that there was a double-layer three-dimensional pore structure in the aluminum oxide layer similar to the structure shown in Fig. 1, and the corrosion pores was communicated with the nanopores. And an aluminum alloy resin composite was prepared.

### Example 6

In this example, an aluminum alloy resin composite was prepared by a method which is substantially the same as the method in Example 1, with the following exceptions.

In the step of surface treatment 1, each aluminum alloy sheet as an anode was placed in an anodizing bath containing a 20wt% H₂SO₄ solution, the aluminum alloy was electrolyzed at a voltage of 40V at 18 °C for 15 min, and then the aluminum alloy sheet was blow-dried.

It was observed that a layer of aluminum oxide film having a thickness of about 7µm was formed after electrolysis, and nanopores having a size of 60-80nm and a depth of 3µm were formed in the aluminum oxide layer. And it was observed that after surface treatment 2, corrosion pores with a size of 300-1000nm and a depth of 4µm was formed in the surface of the immersed aluminum alloy sheet. It may also be observed that there was a double-layer three-dimensional pore structure in the aluminum oxide layer similar to the structure shown in Fig. 1, and the corrosion pores was communicated with the nanopores. And an aluminum alloy resin composite was prepared.

### Example 7

In this example, an aluminum alloy resin composite was prepared by a method which is substantially the same as the method in Example 2, with the following exceptions.

100ml aqueous solution containing 5wt% Na₂CO₃ with pH=11.9 was prepared in a beaker. The aluminum alloy sheet after step (2) was immersed in the sodium carbonate solution, taken out after 5 min, and placed in a beaker containing water to be immersed for 1min. After 5 cycles, after water immersing for the last time, the aluminum alloy sheet was blow-dried.

It was observed that a layer of aluminum oxide film having a thickness of about 5µm was formed after electrolysis, and nanopores having a size of 20-40nm and a depth of 3µm were formed in the aluminum oxide layer. And it was observed that after surface treatment 2, corrosion pores with a size of 300-600nm and a depth of 2µm was formed in the surface of the immersed aluminum alloy sheet. It may also be observed that there was a double-layer three-dimensional pore structure in the aluminum oxide layer similar to the structure shown in Fig. 1, and the corrosion pores was communicated with the nanopores. And an aluminum alloy resin composite was prepared.

### Example 8

In this example, an aluminum alloy resin composite was prepared by a method which is substantially the same as the method in Example 2, with the following exceptions.

100ml aqueous solution containing 15wt% NaHCO₃ with pH=10 was prepared in a beaker. The aluminum alloy sheet after step (2) was immersed in the sodium carbonate solution, taken out after 5 min, and placed in a beaker containing water to be immersed for 1min. After 5 cycles, after water immersing for the last time, the aluminum alloy sheet was blow-dried.

It was observed that a layer of aluminum oxide film having a thickness of about 5µm was formed after electrolysis, and nanopores having a size of 20-40nm and a depth of 3µm were formed in the aluminum oxide layer. And it was observed that after surface treatment 2, corrosion pores with a size of 300-600nm and a depth of 2µm was formed in the surface of the immersed aluminum alloy sheet. It may also be observed that there was a double-layer three-dimensional pore structure in the aluminum oxide layer similar to the structure shown in Fig. 1, and the corrosion pores was communicated with the nanopores. And an aluminum alloy resin composite was prepared.

### Comparative example 1

### 1. Pretreatment:

A commercially available A5052 aluminum alloy plate with a thickness of 1mm was cut into 15mm × 80mm rectangular sheets, which were then polished in a polishing machine, and cleaned with water-free ethanol, and then immersed in a 2wt% NaOH aqueous solution. After 2 min, the rectangular sheets were washed with water and dried to obtain pretreated aluminum alloy sheets.

### 2. Surface-treatment:

Each aluminum alloy sheet was immersed into a hydrazine hydrate aqueous solution having a concentration of 5wt% with pH=11.2. After 2min at 50°C, the aluminum alloy sheet was taken out and washed with deionized water. After 30 cycles, taken out and dried in a drying oven at 60°C.

### 3. Molding:

The dried aluminum alloy piece was inserted into an injection mold. A resin composition containing a polyphenylene sulfide (PPS) resin and 30wt% fiberglass was injection molded. The aluminum alloy resin composite which is a firmly combination of aluminum alloy and resin composite was obtained after being demolded and cooled.

### Comparative example 2

### 1. Pretreatment:

A commercially available A5052 aluminum alloy plate with a thickness of 1mm was cut into 15mm × 80mm rectangular sheets, which were then polished in a polishing machine, and cleaned with water-free ethanol, and then immersed in a 2wt% NaOH aqueous solution. After 2 min, the rectangular sheets were washed with water and dried to obtain pretreated aluminum alloy sheets.

### 2. Surface-treatment:

Each aluminum alloy sheet as an anode was placed in an anodizing bath containing a 20wt% H₂SO₄ solution, the aluminum alloy was electrolyzed at a voltage of 15V for 10min, and then the aluminum alloy sheet was blow-dried.

### 3. Molding:

The dried aluminum alloy piece was inserted into an injection mold. A resin composition containing a polyphenylene sulfide (PPS) resin and 30wt% fiberglass was injection molded. The aluminum alloy resin composite which was a firmly combination of aluminum alloy and resin composite was obtained after being demolded and cooled.

### Performance test

The connectivity of the aluminum alloy and the resin: the aluminum alloy resin composites prepared in examples 1-8 and comparative examples 1-2 were fixed in a universal material testing machine to perform tensile test. The test results under maximum load can be regarded as the connectivity force value between the aluminum alloy and resin, the test results were summarized in Table 1.

**Table 1**

| | Thickness of oxide film layer /µm | Pore size of nanopo res/nm | Depth of nanopores /µm | Pore size of corrosion pores /nm | Depth of Nano Pore/µm | Combination /N |
|---|---|---|---|---|---|---|
| Example 1 | 5 | 40-60 | 1 | 300-1000 | 4 | 1261 |
| Example2 | 5 | 20-40 | 1 | 300-1000 | 4 | 1229 |
| Example3 | 5 | 60-80 | 1 | 300-1000 | 4 | 1240 |
| Example4 | 7 | 40-60 | 3 | 300-1000 | 4 | 1211 |
| Example5 | 7 | 20-40 | 3 | 300-1000 | 4 | 1259 |
| Example6 | 7 | 60-80 | 3 | 300-1000 | 4 | 1236 |
| Example7 | 5 | 20-40 | 3 | 300-600 | 2 | 1222 |
| Example8 | 5 | 20-40 | 3 | 300-600 | 2 | 1255 |
| Comparative example 1 | | | | | | 357 |
| Comparative example 2 | | | | | | 65 |

It can be seen from Table 1 that the combination between the resin and the aluminum alloy in the aluminum alloy resin composite of the present disclosure can achieve up to 1211 N, and then the combination is excellent. While the combination between the resin and the aluminum alloy in existing aluminum alloy resin composite is just tens or hundreds of newton. The performance of the aluminum alloy resin composite in the present disclosure has been improved significantly compared the existing ones and the resin molding is easier. The aluminum alloy in the present disclosure does not need additional moiety to combine firmly to the resin with stronger strength, which has little effect on size of the metal substrate and appearance of the aluminum alloy. At the same time, it is easier to inject mold resin directly into the corrosion holes with a bigger surface. It also has no specific requirement with synthetic resin, so the application scope is wider. And there is no environmental pollution which is more suitable for mass production.

## Claims

1. A method of preparing an aluminum alloy-resin composite, comprising the steps of:
S1: anodizing a surface of an aluminum alloy to form an oxide layer on the surface, in which the oxide layer is formed with nanopores having an average pore size of 10nm to 100nm by providing the aluminum alloy as an anode in a H₂SO₄ solution with a concentration of 10 wt% to 30 wt%; and electrolyzing the aluminum alloy at a temperature of 10°C to 30°C at a voltage of 10V to 100V for 1min to 40min to form the oxide layer with a thickness of 1µm to 10µm on the surface of the aluminum alloy substrate; and;
S2: immersing the resulting aluminum alloy in step S1 in an etching solution being corrosive to the oxide layer to form corrosion pores in an outer surface of the oxide layer, in which the corrosion pores have an average pore size of 200nm to 2000nm, wherein the etching solution is an alkaline etching solution with a pH of 10 to 13; and
S3: injection molding a resin onto the surface of the resulting aluminum alloy substrate in step S2 in a mold to obtain the aluminum alloy-resin composite.

2. The method according to claim 1, wherein the condition of injection molding is: mold temperature 50 to 300°C, nozzle temperature 200-450°C, pressure maintaining time 1-50s, injection pressure 50-300MPa, delay time 1-30s, and cooling time 1-60s.

3. The method according to claims 1 or 2, wherein the resin is formed by a thermoplastic resin.

4. The method according to claim 3, wherein the thermoplastic resin includes a main resin and a polyolefin resin.

5. The method according to claim 4, wherein the main resin includes polyphenylene ether and polyphenylene sulfide, and the polyolefin resin has a melting point of 65°C to 105°C.

6. The method according to claim 4, wherein the main resin includes polyphenylene oxide and a polyamide, and the polyolefin resin has a melting point of 65°C to 105°C.

7. The method according to claim 4, wherein the main resin includes a polycarbonate, and the polyolefin resin has a melting point of 65°C to 105°C.

8. The method according to claim 3, wherein based on 100 weight parts of the thermoplastic resin, the thermoplastic resin further includes a flow improver with 1 weight part to 5 weight parts, and wherein the flow improver includes a cyclic polyester.

9. The method according to any one of claims 1 to 8, wherein the resin further includes a filler; the filler comprises at least one of a fiber filler and a powder inorganic filler, the fiber filler includes at least one selected from the group consisting of fiberglass, carbon fiber and polyamide fiber, and the powder inorganic filler includes at least one selected from the group consisting of silica, talc, aluminum hydroxide, magnesium hydroxide, calcium carbonate, magnesium carbonate, glass and kaolin.

## Patentansprüche

1. Ein Verfahren zur Herstellung eines Aluminiumlegierungsharzverbundstoffes, aufweisend die folgenden Schritte:
S1: Anodisieren einer Oberfläche einer Aluminiumlegierung, um eine Oxidschicht auf der Oberfläche auszubilden, wobei die Oxidschicht mit Nanoporen, die eine durchschnittliche Porengröße von 10nm bis 100nm aufweisen, durch Bereitstellen der Aluminiumlegierung als Anode in einer H₂SO₄-Lösung mit einer Konzentration von 10 Gew.-% bis 30 Gew.-% ausgebildet wird; und Elektrolysieren der Aluminiumlegierung bei einer Temperatur von 10°C bis 30°C bei einer Spannung von 10V bis 100V für 1min bis 40min, um die Oxidschicht mit einer Dicke von 1µm bis 10µm auf der Oberfläche des Aluminiumlegierungssubstrats auszubilden; und
S2: Eintauchen der resultierenden Aluminiumlegierung aus Schritt 1 in eine Ätzlösung, die auf die Oxidschicht korrosiv wirkt, um Korrosionsporen in einer Außenfläche der Oxidschicht auszubilden, wobei die Korrosionsporen eine durchschnittliche Porengröße von 200nm bis 2000nm aufweisen, wobei die Ätzlösung eine alkalische Ätzlösung mit einem pH-Wert von 10 bis 13 ist; und
S3: Spritzgießen eines Harzes auf die Oberfläche des resultierenden Aluminiumlegierungssubstrats aus Schritt 2 in einer Form, um den Aluminiumlegierungsharzverbundstoff zu erhalten.

2. Das Verfahren nach Anspruch 1, wobei das Spritzgießen unter der folgenden Bedingung durchgeführt wird: Formtemperatur 50 bis 300°C, Düsentemperatur 200-450°C, Zeit der Aufrechterhaltung des Drucks 1-50s, Injektionsdruck 50-300MPa, Verzögerungszeit 1-30s, Kühlungszeit 1-60s.

3. Das Verfahren nach Anspruch 1 oder 2, wobei das Harz durch ein thermoplastisches Harz ausgebildet wird.

4. Das Verfahren nach Anspruch 3, wobei das thermoplastische Harz ein Hauptharz und ein Polyolefinharz aufweist.

5. Das Verfahren nach Anspruch 4, wobei das Hauptharz Polyphenylenether und Polyphenylensulfid aufweist, und wobei das Polyolefinharz einen Schmelzpunkt von 65°C bis 105°C aufweist.

6. Das Verfahren nach Anspruch 4, wobei das Hauptharz Polyphenylenoxid und ein Polyamid aufweist, und wobei das Polyolefinharz einen Schmelzpunkt von 65°C bis 105°C aufweist.

7. Das Verfahren nach Anspruch 4, wobei das Hauptharz ein Polycarbonat aufweist, und wobei das Polyolefinharz einen Schmelzpunkt von 65°C bis 105°C aufweist.

8. Das Verfahren nach Anspruch 3, wobei das thermoplastische Harz weiterhin einen Fließverbesserer mit 1 Gewichtsteil bis 5 Gewichtsteilen, bezogen auf 100 Gewichtsteile des thermoplastischen Harzes, aufweist, und wobei der Fließverbesserer ein cyclisches Polyester aufweist.

9. Das Verfahren nach einem der Ansprüche 1 bis 8, wobei das Harz weiterhin einen Füllstoff aufweist, wobei der Füllstoff zumindest einen eines Faserfüllstoffs und eines anorganischen Pulverfüllstoffs aufweist, wobei der Faserfüllstoff zumindest eines ausgewählt aus der Gruppe bestehend aus Glasfaser, Kohlenstofffaser und Polyamidfaser aufweist, und wobei der anorganische Pulverfüllstoff zumindest eines ausgewählt aus der Gruppe bestehend aus Siliziumdioxid, Talk, Aluminiumhydroxid, Magnesiumhydroxid, Calciumcarbonat, Magnesiumcarbonat, Glas und Kaolin aufweist.

## Revendications

1. Un procédé de préparation d'un composite de résine d'alliage d'aluminium, comprenant les étapes suivantes :
S1 : l'anodisation d'une surface d'un alliage d'aluminium pour former une couche d'oxyde sur la surface, la surface d'oxyde étant formée de manière à présenter des nanopores ayant une taille de pore moyenne comprise entre 10nm et 100nm en fournissant l'alliage d'aluminium comme anode dans une solution de H₂O₄ ayant une concentration comprise entre 10 % en poids et 30 % en poids ; et l'électrolyse de l'alliage d'aluminium à une température comprise entre 10°C et 30°C à une tension comprise entre 10V et 100V pendant 1min à 40min pour former la couche d'oxyde de manière à présenter une épaisseur comprise entre 1µm et 10µm sur la couche du substrat d'alliage d'aluminium ; et
S2 : l'immersion de l'alliage d'aluminium résultant de l'étape S1 dans une solution de gravure étant corrosive pour la couche d'oxyde afin de former des pores de corrosion dans une surface externe de la couche d'oxyde, les pores de corrosion présentant une taille de pore moyenne comprise entre 200nm et 2000nm, la solution de gravure étant une solution de gravure alcaline présentant un pH compris entre 10 et 13 ; et
S3 : le moulage par injection d'une résine sur la surface du substrat d'alliage d'aluminium résultant de l'étape S2 dans un moule pour obtenir le composite de résine d'alliage d'aluminium.

2. Le procédé selon la revendication 1, dans lequel la condition du moulage par injection est la suivante : température de moule comprise entre 50 et 300°C, température de buse comprise entre 200 et 450°C, temps de maintien de la pression compris entre 1 et 50s, pression d'injection comprise entre 50 et 300MPa, temps de retard compris entre 1 et 30s, temps de refroidissement compris entre 1 et 60s.

3. Le procédé selon les revendications 1 ou 2, dans lequel la résine est formée par une résine thermoplastique.

4. Le procédé selon la revendication 3, dans lequel la résine thermoplastique comprend une résine principale et une résine de polyoléfine.

5. Le procédé selon la revendication 4, dans lequel la résine principale comprend un éther de polyphénylène et un sulfure de polyphénylène, et la résine de polyoléfine a un point de fusion compris entre 65°C et 105°C.

6. Le procédé selon la revendication 4, dans lequel la résine principale comprend un oxyde de polyphénylène et un polyamide, et la résine de polyoléfine a un point de fusion compris entre 65°C et 105°C.

7. Le procédé selon la revendication 4, dans lequel la résine principale comprend un polycarbonate, et la résine de polyoléfine a un point de fusion entre 65°C et 105°C.

8. Le procédé selon la revendication 3, dans lequel la résine thermoplastique comprend en outre un agent améliorant l'écoulement compris entre 1 partie en poids et 5 parties en poids, sur la base de 100 parties en poids de la résine thermoplastique, l'agent améliorant l'écoulement comprenant un polyester cyclique.

9. Le procédé selon l'une des revendications1 à 8, dans lequel la résine comprend en outre une matière de charge, la matière de charge comprenant au moins une charge d'une charge de fibres et d'une charge de poudre inorganique, la charge de fibres comprenant au moins un constituant sélectionné dans le groupe constitué de fibres de verre, de fibres de carbone, et de fibres de polyamide, et la charge de poudre inorganique comprenant au moins un constituant sélectionné dans le groupe constitué de silice, de talc, d'hydroxyde d'aluminium, d'hydroxyde de magnésium, de carbonate de calcium, de carbonate de magnésium, de verre, et de kaolin.
